# EUROPÄISCHE PATENTSCHRIFT

(11) **EP 1 069 362 B1**
(45) Veröffentlichungstag und Bekanntmachung des Hinweises auf die Patenterteilung: **08.02.2006**
(21) Anmeldenummer: 00113749.6
(22) Anmeldetag: 29.06.2000
(51) Int. Cl.: F16L 27/08

(54) **Drehdurchführung für wechselnde Medien**
Rotatable connection for alternate mediums
Jonction rotative pour milieux alternés

(30) Priorität: 10.07.1999 DE 19932355
(43) Veröffentlichungstag der Anmeldung: 17.01.2001
(73) Patentinhaber: GAT Gesellschaft für Antriebstechnik mbH, 65201 Wiesbaden (DE)
(72) Erfinder: Ott, Stephan, 65201 Wiesbaden (DE); Mittermeier, Norbert, 65795 Hattersheim 3 (DE)

(56) Entgegenhaltungen:
- EP-A- 0 392 838
- DE-A- 19 630 929
- DE-C- 3 817 799
- US-A- 5 199 748
- US-A- 5 203 592
- PATENT ABSTRACTS OF JAPAN vol. 1997, no. 11, 28. November 1997 (1997-11-28) & JP 09 196264 A (RITSUKUSU KK), 29. Juli 1997 (1997-07-29)
- PATENT ABSTRACTS OF JAPAN vol. 1997, no. 11, 28. November 1997 (1997-11-28) & JP 09 196265 A (RITSUKUSU KK), 29. Juli 1997 (1997-07-29)

## Beschreibung

Die vorliegende Erfindung betrifft eine Drehdurchführung für die wechselnde Hindurchführung eines schmierenden und eines nicht-schmierenden Mediums von einem stehenden in ein drehendes Maschinenteil, mit einer ersten Dichtung in Form zweier aufeinander gleitend angeordneter, ebener, im wesentlichen kreisringförmiger Gleitdichtflächen, die im wesentlichen konzentrisch zu der Drehachse des drehenden Maschinenteils angeordnet sind und die in axialer Richtung mindestens so weit auseinander bewegbar sind, daß sie einander während der Relativdrehung des drehenden Maschinenteils nicht berühren (siehe z.B. DE-A-19630929).

Solche Drehdurchführungen, die auch als "trockenlaufsichere Drehdurchführungen" bezeichnet werden, sind bereits bekannt. Wenn ein schmierendes Medium zugeführt wird, werden die beiden ebenen Gleitdichtflächen in Kontakt miteinander gebracht, wobei das schmierende Medium zwischen den aufeinander gleitenden Dichtflächen einen Schmierfilm bildet, so daß auf diese Weise sichergestellt wird, daß auch bei hohen Drehzahlen kaine ubermäßige Reibungswärme entsteht, die ansonsten sehr schnell zur Zerstörung der Gleitdichtflächen führen könnte.

Allerdings müssen die Gleitdichtflächen in axialer Richtung auseinander bewegt werden, wenn sich das drehende Maschinenteil mit einer gewissen Rotationsgeschwindigkeit dreht, ohne daß das schmierende Medium zugeführt wird. In diesem Fall kann sich nämlich kein Schmierfilm zwischen den Gleitdichtflächen ausbilden und bei trocken aufeinander gleitenden Dichtflächen, die zumeist aus einem keramischen Material hergestellt sind, werden diese sehr schnell heiß und können dadurch zerstört werden, selbst wenn die Rotationsgeschwindigkeit des drehenden Maschinenteils vergleichsweise klein ist und weit unterhalb der Höchstdrehzahl liegt, für die die Dichtung für den Fall der Zuführung des schmierenden Mediums ausgelegt ist.

Die Trockenlaufsicherheit erhält man also dadurch, daß die beiden ebenen Gleitdichtflächen in axialer Richtung ein Stück weit auseinander bewegt werden, wobei der sich dabei vergrößernde Dichtspalt auf jeden Fall so groß sein muß, daß es auch unter Berücksichtigung der möglicherweise auftretenden Bauteiltoleranzen der gesamten Vorrichtung, an welcher die Drehdurchführung angebracht ist, nicht zu einer Berührung der Gleitdichtflächen kommt, solange das schmierende Medium nicht zugeführt wird.

Dabei gibt es eine Reihe von Anwendungsfällen, bei welchen während der Drehung des drehenden Maschinenteils auch ein anderes Medium zugeführt werden soll, welches keine Schmiereigenschaften hat. Beispielsweise kann an einer Werkzeugmaschine während einer ersten Arbeitsphase eine Wasser-Ölemulsion als Kühl- und Schmiermittel durch eine hohle Spindel zugeführt werden, deren eines Ende mit dem drehenden Teil der Drehdurchführung verbunden ist bzw. dieses drehende Teil darstellt, und während einer anderen Arbeitsphase kann zum Beispiel Druckluft zum Ausblasen eines Bohrlochs oder zum Freiblasen des Arbeitsbereichs eines Werkzeuges zugeführt werden, während sich das Werkzeug weiterhin dreht.

Der während der Zuführung dieses nicht-schmierenden Mediums bewußt vergrößerte Dichtspalt zur Schonung der Gleitdichtflächen hat dann allerdings den Nachteil, daß in ganz erheblichem Maße Druckluft durch diesen Dichtspalt entweichen kann, was nicht nur zu einem Druckabfall und damit zu einer geringeren Effektivität der an einen Arbeitsort zugeführten Druckluft führt, sondern zusätzlich auch einen erheblichen Enegieverlust bedeutet.

Ausgehend von diesem Stand der Technik liegt der vorliegenden Erfindung die Aufgabe zugrunde, eine Drehdurchführung der eingangs genannten Art zu schaffen, die trotz der sogenannten Trockenlaufsicherheit dennoch nur geringe Leckverluste auch bei der Hindurchführung eines nicht-schmierenden Mediums und selbst bei hohen Drehzahlen des drehenden Maschinenteils aufweist.

Diese Aufgabe wird dadurch gelöst, daß neben der ersten, ebenen Dichtung eine zusätzliche zylindrische Dichtung vorgesehen ist, deren Dichtflächen von mit einem schmalen Dichtspalt konzentrisch zueinander angeordneten Zylindermantelflächen gebildet werden, wobei die zylindrische Dichtung in Richtung eines potentiellen Leckstromes zwischen dem Strömungsdurchgang der Drehdurchführung und der ersten Dichtung angeordnet ist.

Die vorstehend genannten Merkmale bewirken, daß das nicht-schmierende Medium, bevor es überhaupt durch den vergrößerten axialen Spalt der ebenen Dichtung hindurchtreten kann, durch die von Zylindermantelflächen gebildete Dichtung und den dazwischen ausgebildeten schmalen Dichtspalt hindurchtreten muß, der allerdings wesentlich enger und kleiner gehalten werden kann als der axiale Spalt zwischen den ebenen Gleitdichflächen im Falle der Zuführung eines nicht-schmierenden Mediums.

Die zylindrischen Dichtflächen können deshalb mit wesentlich engeren und kleineren Toleranzen hergestellt werden, weil bei zylindrischen Flächen mit entsprechend kleinen Durchmessern sehr enge Toleranzen eingehalten werden können. Dagegen wird der axiale Abstand zwischen ebenen Gleitdichtflächen durch alle damit verbundenen Bauteile, die relativ lang sein können, beeinflußt, so daß bei den axialen Flächen ein wesentlich größerer Sicherheitsabstand einzuhalten ist, um die Drehdurchführung trockenlaufsicher zu machen. Hinzu kommt daß, jedenfalls in der bevorzugten Ausführungsform der Erfindung, der Radius der Zylindermantelflächen kleiner ist als der Innendurchmesser der ebenen, ringförmigen Gleitdichtflächen der ersten Dichtung. Wegen des geringen Radius dieser Zylindermantelflächen sind auch die Relativgeschwindigkeiten zwischen den einander gegenüberliegenden Dichtflächen kleiner und selbst im Fall einer leichten Berührung entsteht daher nur relativ wenig Reibungswärme.

Auf diese Weise kann man sicherstellen, daß auch ein Medium mit sehr niedriger Viskosität, wie zum Beispiel Druckluft, mit einer nur sehr geringen Leckrate durch die Drehdurchführung hindurchgeführt werden kann, selbst wenn sich das drehende Maschinenteil mit hohen Drehzahlen von zum Beispiel 20.000 Umdrehungen/Minute relativ zu dem stehenden Maschinenteil dreht.

Wenn das schmierende Medium zugeführt wird, so dringt dieses selbstverständlich ebenfalls in den schmalen radialen Dichtspalt zwischen den zylindrischen Dichtflächen ein und von dort auch in den axialen Spalt zwischen den ebenen Gleitdichtflächen, wobei in diesem Fall jedoch die Gleitflächen aneinander gedrückt werden und damit den Dichtspalt praktisch auf die Dicke des Schmierfilmes reduzieren, der aus dem schmierenden Medium entsteht.

Zweckmäßigerweise ist die äußere Zylindermantelfläche der zweiten Dichtung mit dem drehenden Maschinenteil verbunden, während die innere Zylindermantelfläche der zweiten Dichtung mit dem stehenden Maschinenteil verbunden ist. Selbstverständlich ist im Prinzip auch die umgekehrte Ausgestaltung möglich.

In jedem Fall ist es jedoch zweckmäßig, die zylindrischen Dichtflächen derart anzuordnen, daß die innere Zylindermantelfläche in axialer Richtung mit dem Bereich der ersten, ebenen Dichtung überlappt. Mit anderen Worten, die innere Zylindermantelfläche, die sich an einer Hülse befindet, ist entweder mit dem stehenden oder mit dem drehenden Maschinenteil verbunden und die Dichtung mit den ebenen Dichtflächen umfaßt diese Hülse, wobei je eine der ebenen Dichtflächen mit dem stehenden bzw. drehenden Maschinenteil verbunden ist, der über die ebene erste Dichtung in axialer Richtung hinausragende Teil dieser Hülse bzw. zylindrischen Wand bildet die innere oder äußere Dichtfläche der zweiten Dichtung.

Zweckmäßig ist es außerdem, wenn die ebenen Dichtflächen in Anlage miteinander federnd vorgespannt sind. Dies bedeutet, daß sich die ebenen Gleitdichtflächen im Normalfall mit einer wohldefinierten Andruckkraft berühren, so daß die Drehdurchführung für die Zufuhr eines schmierenden Mediums ausgelegt ist, während für die Zuführung nicht-schmierender Medien die Gleitdichtflächen gegen die Kraft der Feder in axialer Richtung auseinander bewegt werden müssen. Dies ist bei vielen Anwendungsfällen der kürzere Arbeitstakt.

Vorzugsweise sind die jeweiligen Dichtflächen bzw die diese Dichtflächen direkt oder indirekt tragenden Teile so ausgestaltet, daß die ebenen Dichtflächen zu einer axialen Dichtspaltbreite auseinander bewegt werden können, die mindestens das Zehnfache der radialen Dichtspaltbreite zwischen den Zylindermantelflächen der zweiten Dichtung beträgt.

Umgekehrt könnte man auch sagen, daß die radiale Dichtspaltbreite der Zylindermantelflächen höchstens ein Zehntel der erforderlichen axialen Mindestspaltbreite der ersten Dichtung beträgt, die für die Trockenlaufsicherheit jedenfalls für den Dauerbetrieb eingestellt werden muß. Unter Berücksichtigung des kleineren Radius der Zylindermantelflächen gegenüber den ebenen Gleitdichtflächen und unter Berücksichtigung des axialen Strömungsweges entlang der zylindrischen Dichtflächen im Vergleich zu dem radialen Strömungsweg zwischen den ebenen Gleitdichtflächen erreicht man durch die vorgenannte Ausgestaltung, daß die Leckrate bei der erfindungsgemäßen Ausgestaltung im Vergleich zu dem alleinigen Vorsehen der ebenen Dichtung mit einem vergrößerten Dichtspalt zur Trockenlaufsicherheit um mindestens einen Faktor 100 vermindert wird.

Eine bevorzugte Ausführungsform der Erfindung hat in die Drehdurchführung integrierte Wälzlager und eine Hohlwelle, die in den Wälzlagern drehbar angeordnet ist und die mit der äußere Zylindermantelfläche einstückig verbunden ist.

Bei dieser Ausführungsform kann eine besonders exakte Führung der zylindrischen Dichtflächen erreicht werden, so daß diese mit besonders engen Toleranzen herstellbar sind, der radiale Dichtspalt also besonders schmal gemacht werden kann.

Bezüglich der ebenen Gleitdichtflächen ist eine Ausgestaltung der Erfindung bevorzugt, bei welcher diese Gleitdichtflächen an Gleitdichtringen angeordnet sind, die jeweils mit dem stehenden bzw. dem drehenden Maschinenteil fest und dicht verbindbar sind.

Da die Gleitdichtflächen oftmals aus einem besonderen Material, zum Beispiel aus Keramiken hergestellt sind, ist diese Anordnung der Gleitdichtflächen an getrennten, aber fest und dicht mit den zugeordneten Teilen verbindbaren Ringen besonders zweckmäßig.

Weiterhin ist eine Ausführungsform der Erfindung zweckmäßig, bei welcher entweder der innere oder der äußere Zylindermantel der zweiten Dichtung in radialer Richtung nachgiebig elastisch gelagert ist. Hierdurch können geringe Toleranzabweichungen und Unrundheiten der einander gegenüberliegenden Dichtflächen leicht ausgeglichen werden, ohne daß es zu einer übermäßigen oder nennenswerten Reibung und einem Verschleiß der zylindrischen Flächen kommt.

Zweckmäßigerweise ist für ein gasförmiges bzw. nicht-schmierendes Medium eine radiale Zuführöffnung an der erfindungsgemäßen Drehdurchführung vorgesehen, wahrand für das schmierende Medium eine axiale Zufuhröffnung zentral an einem Ende der Drehdurchführung vorgesehen ist, wobei aber diese Positionen auch ohne weiteres vertauscht werden können.

Damit die Zufuhr der Medien unabhängig und ohne wechselseitige Störung erfolgen kann, ist in diesem Fall außerdem in der bevorzugten Ausführungsform der Erfindung vorgesehen, daß die Zufuhröffnung für Gas bzw. ein anderes nicht-schmierendes Medium und auch die Zufuhröffnung für das schmierende Medium jeweils durch Rückschlagventile gegen ein Ausströmen dieses oder des jeweils anderen Mediums entgegen der Zuführrichtung gesichert sind.

Zweckmäßig ist es außerdem, wenn das schmierende Medium axial und das nicht-schmierende Medium radial in eine Buchse zugeführt werden, die in dem stehenden Maschinenteil nicht drehbar, aber axial verschiebbar gelagert ist und die die Dichtflächen des stehenden Maschinenteils sowohl der ersten als auch der zweiten Dichtung trägt. Bei dieser Ausführungsform wird bei der axialen Zuführung des schmierenden Mediums auf die axial bewegliche Hülse Druck ausgeübt, wodurch sowohl das an dieser Buchse vorgesehene Rückschlagventil öffnet als auch die Buchse in axialer Richtung mit ihrer ebenen Gleitdichtfläche an die Gleitdichtfläche des rotierenden Maschinenteils angedrückt wird, so daß sich bei Zufuhr des schmierenden Mittels automatisch der gewünschte, schmale Dichtspalt einstellt. Wird die Zufuhr des schmierenden Mediums gestoppt, so daß auch der Druck auf die Buchse in axialer Richtung nachläßt und wird stattdessen durch die radiale Zufuhröffnung der Buchse das nicht-schmierende Medium zugeführt, so öffnet dessen Druck nicht nur das zweite Rückschlagventil, sondern beaufschlagt auch das erstgenannte Rückschlagventil axial in der entgegengesetzten Richtung zum schmierenden Medium, wodurch die Buchse axial zurückbewegt wird und die beiden ebenen Gleitdichtflächen dadurch auseinanderbewegt werden. Auf diese Weise wird die gewünschte Stellung der Dichflächen automatisch durch die jeweils wechselnde Zufuhr des schmierenden bzw. des nicht-schmierenden Mediums eingestellt.

Wenn allerdings die Drehdurchführung auch ohne Zufuhr irgendeines der beiden Medien genutzt werden soll, so kann die die Gleitdichtflächen tragende Buchse des feststehenden Maschinenteils auch durch eine Feder entgegen der Druckkraft des schmierenden Mediums vorgespannt sein, so daß im Normalfall, bei ausbleibender Zufuhr des schmierenden Mediums, die ebenen Gleitdichtflächen 4, 6 auseinanderbewegt und nicht in Kontakt miteinander sind.

Weitere Vorteile, Merkmale und Anwendungsmöglichkeiten der vorliegenden Erfindung werden deutlich anhand der folgenden Beschreibung einer bevorzugten Ausführungsform und der dazugehörigen Figuren. Es zeigen:
- Figur 1: einen axialen Längsschnitt durch eine erfindungsgemäße Drehdurchführung und
- Figur 2: einen vergrößerten Ausschnitt der die Dichtflächen tragenden Bereiche bei Zufuhr eines schmierenden Mediums,
- Figur 3: denselben Ausschnitt wie Figur 2,jedoch bei Zufuhr eines nicht-schmierenden Mediums und
- Figur 4: einen ähnlichen Schnitt wie in Figur 1, jedoch durch eine andere Ausführungsform mit eigenen Wälzlagern.

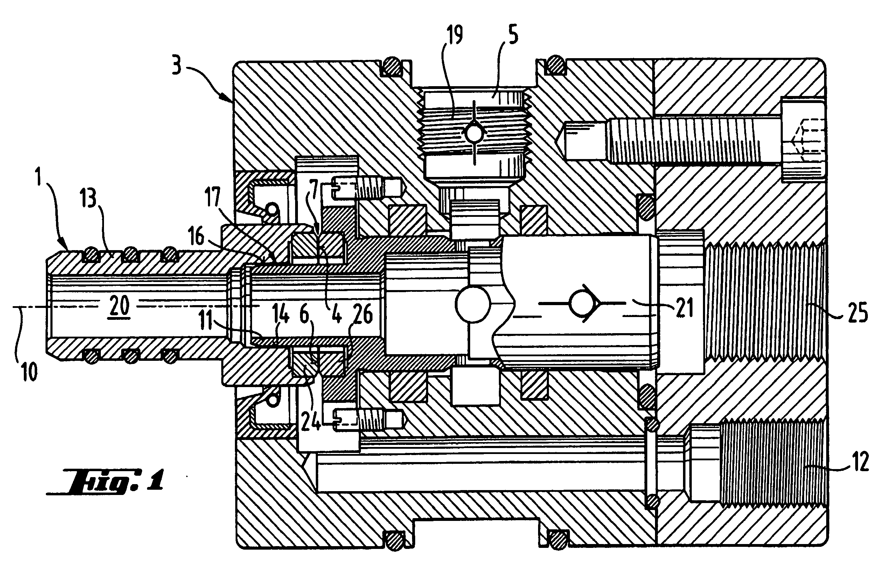

Man erkennt in Figur 1 ein Gehäuse 3 einer Drehdurchführung, welches einem stehenden Maschinenteil entspricht bzw. mit einem solchen verbunden ist. Weiterhin erkennt man ein drehbares Maschinenteil 1 mit einer Hohlwelle 13 mit einem Durchgang 20. Der Durchgang 20 ist wahlweise mit einer radialen Zufuhröffnung 5 oder einer axialen Zufuhröffnung 25 verbindbar, die jeweils durch Rückschlagventile 19 bzw. 21 gegen eine rückwärtige Strömung und insbesondere gegen rückwärtige Strömung des jeweils anderen Mediums abgesichert sind.

Die beiden gegeneinander rotierenden Maschinenteile 3 bzw. 1 stehen über eine erste, radiale Dichtung 7 und eine zweite axiale Dichtung 17 miteinander in Verbindung. Die radiale Dichtung 7 wird gebildet von zwei Gleitscheiben bzw. Gleitringen 24, 26 mit Gleitdichtflächen 4, 6, die in einer radialen Ebene der Drehdurchführung liegen.

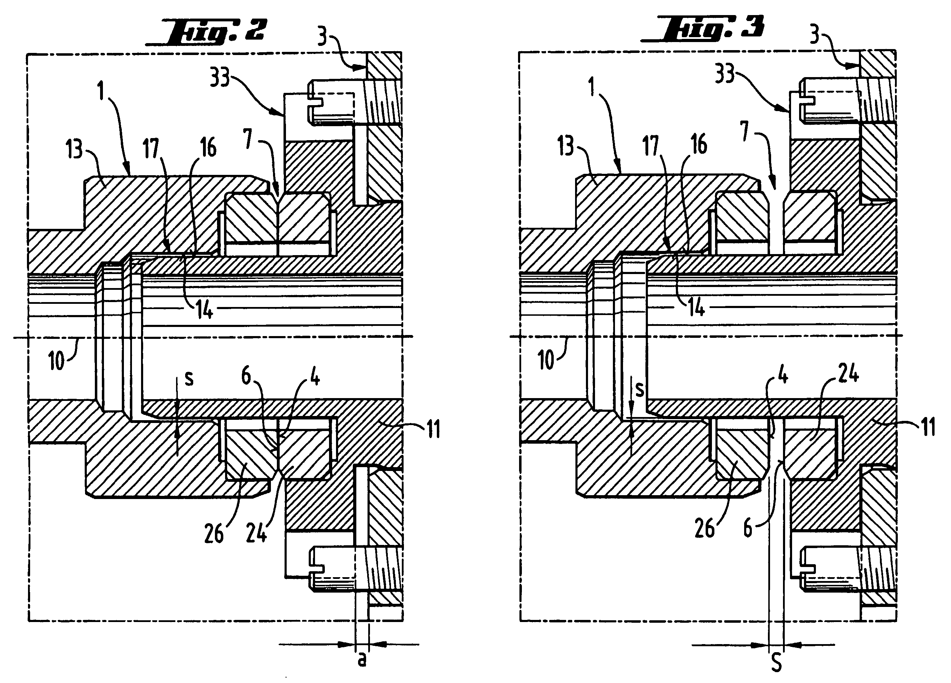

Mit 25 ist eine axiale Eintrittsöffnung für ein schmierendes Medium bezeichnet. In Strömungsrichtung hinter der Eintrittsöffnung 25 befindet sich noch ein Rückschlagventil 21, welches durch den Druck, mit welchem das schmierende Medium in die Drehdurchführung eingeführt wird, geöffnet wird. Durch den auf das Rückschlagventil 21 und die Stirnseiten und Abstufungen der Hülse 11 wirkenden Druck wird dabei gleichzeitig die Hülse 11 in axialer Richtung bewegt (in den dargestellten Figuren nach links), so daß sich der Dichtspalt 7 zwischen den Dichtflächen 4 und 6 schließt, wobei, wie in Figur 2 dargestellt, der Anschlagflansch 33 der Hülse 1 1 gegenüber dem entsprechenden Gehäuseanschlag um einen Spalt a auseinanderbewegt wird. Wie man sieht, ist durch Sicherungsschrauben der Flansch 33 gegen Verdrehung an dem stehenen Gehäuse bzw. Maschinenteil 3 gesichert.

Das schmierende Medium kann dann durch die zentrale Durchgangsbohrung 20 in Richtung einer Verbrauchsstelle strömen. Durch den in dem schmierenden Medium herrschenden Druck wird gleichzeitig das Rückschlagventil 19 in der Zufuhröffnung für ein weiteres, nicht-schmierendes Medium geschlossen gehalten. Das schmierende Medium kann weiterhin durch den radialen Dichtspalt, der zwischen den zylindrischen Flächen 14 und 16 gebildet wird, hindurchtreten und dringt schließlich in den Spalt zwischen den Gleitdichtflächen 4 und 6 ein, um dort einen Schmierfilm zu bilden, der aber gleichzeitig auch abdichtend wirkt. Ein Leckraum umgibt die Gleitdichtringe 24, 26, so daß das austretende Medium dort aufgefangen und über den nur in Figur 2 dargestellten Leckanschluß 12 abgeführt werden kann. Die austretenden Leckmengen sind jedoch aufgrund dieser Ausgestaltung der Dichtungen sehr gering.

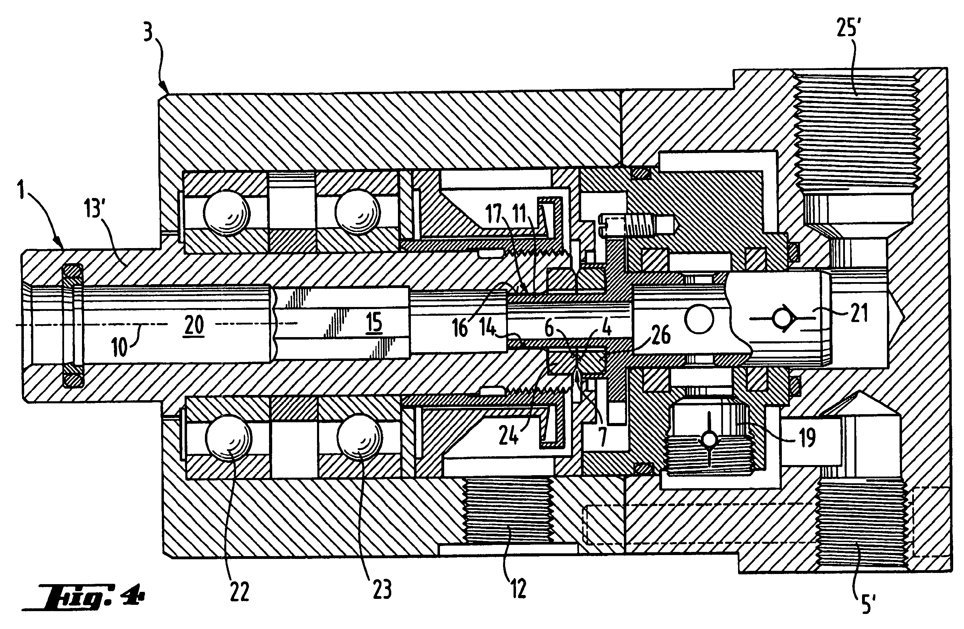

Wenn die Zufuhr des schmierenden Mediums beendet werden soll, so wird der Druck dieses Mediums an der Eintrittsöffriung 25 so weit herabgesetzt, daß das Rückschlagventil 21 schließt. Anschließend kann durch die radiale Zufuhröffnung 5 ein anderes Medium, zum Beispiel Druckluft, zugeführt werden. Nachdem zunächst durch die eintretende Druckluft die in dem Durchgang 20 verbleibende Menge an schmierendem Medium herausgedrückt wurde, wird nunmehr Druckluft durch den Durchgang 20 geleitet. Durch den Druck des nicht-schmierenden Mediums, welches radial in die Hülse 11 bzw. eine damit fest verbundene, das Rückschlagventil 21 tragende Hülse zugeführt wird, wird das Rückschlagventil 21 nunmehr in Gegenrichtung zu der Zufuhr des schmierenden Mediums mit Druck beaufschlagt, so daß sich die Hülse 11 in axialer Richtung zurückbewegt (in den dargestellten Figuren nach rechts) und in eine Position, wie sie in Figur 3 vergrößert dargestellt ist. Dabei schließt sich der Spalt a zwischen dem Flansch 33 und dem stehenden Gehäuse 3 und stattdessen tut sich ein entsprechender Spalt S zwischen den Gleitdichtflächen 4 und 6 auf. Die Gleitdichtflächen 4, 6 haben dann einen zwar kleinen aber dennoch deutlichen Abstand voneinander, der typischwerweise zehn- bis fünfzigmal größer ist als der radiale Abstand S zwischen den Flächen 14, 16. Durch den Druck der Druckluft wird außerdem das Rückschlagventil 21 geschlossen gehalten, während gleichzeitig das Ventil 19 aufgrund dieses Druckes offen ist. Diese Druckluft kann auf demselben Leckweg entweichen wie zuvor das schmierende Medium, wobei in diesem Falle allerdings der axiale Spalt S zwischen den Gleitdichtflächen 4 und 6 wesentlich größer ist. Jedoch stellt der enge radiale Spalt zwischen den Zylindermantelflächen 14 und 16 einen ausreichenden Strömungswiderstand bereit, um den Verlust an Druckluft genügend gering zu halten und um Größenordnungen geringer als dieser Verlust wäre, wenn die Druckluft direkt durch den axialen Spalt zwischen den Flächen 4 und 6 entweichen könnte.

Die radiale Dichtfläche 16 befindet sich dabei an einem hohlzylindrischen Fortsatz einer Hülse 11, die dicht und, wie bereits erwähnt, axial beweglich in das Gehäuse 3 der Drehdurchführung eingesetzt ist.

Die Zylindermantelfläche 14 befindet sich an einem Ende im Inneren der den Durchgang 20 bildenden Bohrung der Hohlwelle 13 und konzentrisch zu dieser Bohrung. Im übrigen kann aber auch die Hohlwelle 13 axial beweglich gelagert sein, gegebenenfalls zwischen axialen Endanschlägen, um dadurch eine Spannvorrichtung oder dergleichen bezätigen zu können.

Die übrigen dargestellten Bauteile dienen im wesentlichen nur einer möglichst einfachen Herstellung und Montage und bedürfen hier keiner weiteren Erläuterung.

In Figur 2 ist eine Ausführungsform der Erfindung dargestellt, die in wesentlichen Teilen mit der Ausführung nach Figur 1 identisch ist, jedoch auch einige Unterschiede aufweist. Zum Beispiel wird der zentrale Anschluß 25 am hinteren Ende des Gehäuses in radialer Richtung herausgeführt, auch wenn letzlich die Zufuhr dieses Mediums in axialer Richtung und zentral verläuft. Der Hauptunterschied liegt jedoch gegenüber der Ausführungsform nach Figur 1 darin, daß die Hohlwelle 13' in dem Gehäuse 3' kugelgelagert gehalten wird. Dadurch ist eine noch bessere Führung der Hohlwelle möglich, vor allen Dingen erfolgt diese Führung sehr nahe an den zylindrischen Dichtflächen 14, 16 und die Lager 22, 23 sind in dasselbe Gehäuse integriert, in welchem auch die Dichtfläche 16 fixiert ist. Dadurch lassen sich die Zylindermantelflächen 14, 16 mit noch engerer Toleranz herstellen und man erreicht dementsprechend noch geringere Leckverluste für das nicht-schmierende Medium.

Mit 15 ist ein Innensechskant innerhalb der Bohrung der Hohlwelle 13' bezeichnet, der die Drehfeste Mitnahme einer in der Hohlwelle aufgenommenen und axial verschiebbaren Spannstange bewirkt. Nicht oder nur ansatzweise dargestellt ist in den Figuren eine mehr oder weniger elastische Lagerung einer der Dichtflächen in radialer Richtung, wodurch ein gewisser Ausgleich von Toleranzabweichung der Rundheit der Flächen 14, 16 erzielt werden kann.

## Patentansprüche

1. Drehdurchführung für die wechselnde Hindurchführung eines schmierenden und eines nicht-schmierenden Mediums von einem stehenden (3) in ein drehendes Maschinenteil (1), mit einer ersten Dichtung (7) in Form zweier aufeinander gleitend angeordneter, ebener, im wesentlichen kreisringförmiger Gleitdichtflächen (4, 6), die im wesentlichen konzentrisch zu der Drehachse (10) des drehenden Maschinenteils (1) angeordnet sind und die in axialer Richtung soweit auseinander bewegbar sind, daß sie während der Drehung des drehenden Maschinenteils (1) nicht mehr miteinander in Kontakt kommen, **dadurch gekennzeichnet, daß** eine zusätzliche zylindrische Dichtung (17) vorgesehen ist, deren Dichtflächen von mit einem schmalen Dichtspalt konzentrisch zueinander angeordneten Zylindermantelflächen (14, 16) gebildet werden, wobei die zylindrische Dichtung (17) in Leckstromrichtung zwischen dem Strömungsdurchgang (20) der Drehdurchführung und der ersten Dichtung (7) angeordnet ist.

2. Drehdurchführung nach Anspruch 1, **dadurch gekennzeichnet, daß** die ringförmigen Gleitdichtflächen (4, 6) einen Innendurchmesser haben, der größer ist als der Durchmesser der Zylindermantelflächen (14, 16) der zweiten Dichtung (17).

3. Drehdurchführung nach Anspruch 1 oder 2, **dadurch gekennzeichnet, daß** die äußere Zylindermantelfläche (14) mit dem drehenden Maschinenteil (1) und die innere Zylindermantelfläche (16) mit dem stehenden Maschinenteil (3) verbunden sind.

4. Drehdurchführung nach einem der Ansprüche 1 bis 3, **dadurch gekennzeichnet, daß** die innere Zylindermantelfläche (16) in axialer Richtung mit dem Bereich der ersten ebenen Dichtung (7) überlappt.

5. Drehdurchführung nach einem der Ansprüche 1 bis 4, **dadurch gekennzeichnet, daß** die ebenen Dichtflächen (4, 6) in Anlage miteinander federnd vorgespannt sind.

6. Drehdurchführung nach einem der Ansprüche 1 bis 5, **dadurch gekennzeichnet, daß** die ebenen Dichtflächen (4, 6) zu einer axialen Dichtspaltbreite auseinander bewegbar sind, die mindestens das Zehnfache der radialen Dichtspaltweite zwischen den Zylindermantelflächen (14, 16) beträgt.

7. Drehdurchführung nach einem der Ansprüche 1 bis 6, **dadurch gekennzeichnet, daß** sie integrierte Wälzlager (22, 23) und eine in den Wälzlagern drehbar aufgenommene Hohlwelle (13) aufweist, die einstückig mit der äußeren Zylindermantelfläche (14) verbunden ist.

8. Drehdurchführung nach einem der Ansprüche 1 bis 7, **dadurch gekennzeichnet, daß** die ebenen Gleitdichtflächen (4, 6) an jeweils mit dem stehenden und dem drehenden Maschinenteil (3, 1) fest und dicht verbindbaren Gleildichtringen (24, 26) angeordnet sind.

9. Drehdurchführung nach einem der Ansprüche 1 bis 8, **dadurch gekennzeichnet, daß** die innere oder die äußere Zylindermantelfläche (14,1 6) in radialer Richtung elastisch nachgiebig gelagert sind.

10. Drehdurchführung nach einem der Ansprüche 1 bis 9, **dadurch gekennzeichnet, daß** eine radiale Zufuhröffnung (5) für gasförmiges bzw. nicht-schmierendes Medium und eine axiale Zufuhrföffnung (25) für ein schmierendes Medium in einem mit dem stehenden Maschinenteil (3) fest verbundenen Gehäuse der Drehdurchführung vorgesehen sind.

11. Drehdurchführung nach Anspruch 10, **dadurch gekennzeichnet, daß** die Zufuhröffnung (5) für Gas bzw. ein nicht-schmierendes Medium und/oder die Zufuhröffnung (25) für ein schmierendes Medium jeweils durch Rückschlagventile (19 bzw. 21) gegen das Ausströmen des jeweiligen Mediums gesichert sind.

12. Drehdurchführung nach einem der Ansprüche 1 bis 11, **dadurch gekennzeichnet, daß** die Dichtflächen (6, 16) des stehenden Maschinenteils an einer axial beweglich gelagerten Hülse (11) angeordnet sind, die auch das Rückschlagventil (21) für das axial zugeführte, schmierende Medium trägt, während durch eine radiale Öffnung, die zwischen dem Rückschlagventil und den Dichtflächen (6, 16) mündet, das nicht-schmierende Medium zugeführt wird.

## Claims

1. A rotary joint for alternating passage of a lubricating medium and a non-lubricating medium from a stationary (3) to a rotating machine part (1), having a first seal (7) in the form of two flat, substantially circular ring-shaped sliding sealing surfaces (4, 6) arranged so as to slide one on the other, which sealing surfaces (4, 6) are substantially concentric relative to the axis of rotation (10) of the rotating machine part (1) and may be moved at least far enough from one another, in the axial direction, that they do not come into contact with each other during rotation of the rotating machine part (1), **characterized in that** an additional cylindrical seal (17) is provided, the sealing surfaces of which are formed of cylindrical circumferential surfaces (14, 16) arranged concentrically to one another with a narrow sealing gap, the cylindrical seal (17) being arranged in the direction of leakage flow between the flow passage (20) of the rotary joint and the first seal (7).

2. A rotary joint according to Claim 1, **characterised in that** the annular sliding sealing surfaces (4, 6) have an internal diameter which is larger than the diameter of the cylindrical circumferential surfaces (14, 16) of the second seal (17).

3. A rotary joint according to Claim 1 or Claim 2, **characterised in that** the outer cylindrical circumferential surface (14) is connected with the rotating machine part (1) and the inner cylindrical circumferential surface (16) is connected with the stationary machine part (3).

4. A rotary joint according to one of Claims 1 to 3, **characterised in that** the inner cylindrical circumferential surface (16) overlaps the area of the first flat seal (7) in the axial direction.

5. A rotary joint according to one of Claims 1 to 4, **characterised in that** the flat sealing surfaces (4, 6) are resiliently pre-stressed against each other.

6. A rotary joint according to one of Claims 1 to 5, **characterised in that** the flat sealing surfaces (4, 6) may be moved away from one another to form an axial sealing gap width which amounts to at least ten times the radial sealing gap width between the cylindrical circumferential surfaces (14, 16).

7. A rotary joint according to one of Claims 1 to 6, **characterised in that** it comprises integral rolling bearings (22, 23) and a hollow shaft (13) accommodated rotatably in the rolling bearings, which hollow shaft (13) is connected integrally with the outer cylindrical circumferential surface (14).

8. A rotary joint according to one of Claims 1 to 7, **characterised in that** the flat sliding sealing surfaces (4, 6) are each arranged on sliding sealing rings (24, 26) which may be connected firmly and in leak-proof manner with the stationary and the rotating machine part respectively (3, 1).

9. A rotary joint according to one of Claims 1 to 8, **characterised in that** the inner or the outer cylindrical circumferential surface (14, 16) is mounted so as to be elastically resilient in the radial direction.

10. A rotary joint according to one of Claims 1 to 9, **characterised in that** a radial feed opening (5) for gaseous or non-lubricating medium and an axial feed opening (25) for a lubricating medium are provided in a rotary joint housing firmly connected with the stationary machine part (3).

11. A rotary joint according to Claim 10, **characterized in that** the feed opening (5) for gas or non-lubricating medium and/or the feed opening (25) for a lubricating medium is secured by non-return valves (19 and 21) against outflow of the particular medium.

12. A rotary joint according to one of Claims 1 to 11, **characterised in that** the sealing surfaces (6, 16) of the stationary machine part are arranged on a sleeve (11) mounted in axially movable manner, which sleeve (11) also carries the non-return valve (21) for the axially fed, lubricating medium, while the non-lubricating medium is fed through a radial opening, which discharges between the non-return valve and the sealing surfaces (6, 16).

## Revendications

1. Traversée rotative pour l'amenée alternée, d'une partie fixe (3) à une partie rotative (1) de machine, d'un agent lubrifiant et d'un agent non lubrifiant, comprenant une première garniture d'étanchement (7) revêtant la forme de deux surfaces planes (4, 6) d'étanchement par glissement qui sont agencées avec glissement l'une sur l'autre, sont sensiblement configurées en anneaux circulaires, sont disposées pour l'essentiel concentriquement à l'axe de rotation (10) de la partie rotative (1) de la machine, et peuvent être écartées l'une de l'autre, dans la direction axiale, de façon telle qu'elles ne viennent plus en contact l'une avec l'autre au cours de la rotation de ladite partie rotative (1) de la machine, **caractérisée par le fait qu'**il est prévu une garniture cylindrique d'étanchement (17) additionnelle dont les surfaces d'étanchement sont formées par des surfaces (14, 16) d'enveloppe cylindrique disposées concentriquement l'une à l'autre avec un étroit interstice d'étanchement, ladite garniture cylindrique d'étanchement (17) étant interposée, dans la direction de l'écoulement de fuite, entre la première garniture d'étanchement (7) et le passage d'écoulement (20) de la traversée rotative.

2. Traversée rotative selon la revendication 1, **caractérisée par le fait que** les surfaces annulaires (4, 6) d'étanchement par glissement présentent un diamètre intérieur plus grand que le diamètre des surfaces (14, 16) d'enveloppe cylindrique de la seconde garniture d'étanchement (17).

3. Traversée rotative selon la revendication 1 ou 2, **caractérisée par le fait que** la surface extérieure (14) d'enveloppe cylindrique et la surface intérieure (16) d'enveloppe cylindrique sont respectivement reliées à la partie rotative (1) de la machine et à la partie fixe (3) de ladite machine.

4. Traversée rotative selon l'une des revendications 1 à 3, **caractérisée par le fait que** la surface intérieure (16) d'enveloppe cylindrique est en chevauchement, dans la direction axiale, avec la région de la première garniture plane d'étanchement (7).

5. Traversée rotative selon l'une des revendications 1 à 4, **caractérisée par le fait que** les surfaces planes d'étanchement (4, 6) sont précontraintes élastiquement avec contact mutuel.

6. Traversée rotative selon l'une des revendications 1 à 5, **caractérisée par le fait que** les surfaces planes d'étanchement (4, 6) peuvent être écartées l'une de l'autre jusqu'à une largeur axiale d'interstice d'étanchement représentant au moins le décuple de la largeur radiale d'interstice d'étanchement entre les surfaces (14, 16) d'enveloppe cylindrique.

7. Traversée rotative selon l'une des revendications 1 à 6, **caractérisée par le fait qu'**elle comprend des paliers de roulement (22, 23) intégrés et un arbre creux (13) qui est logé à rotation dans lesdits paliers de roulement et est relié, d'un seul tenant, à la surface extérieure (14) d'enveloppe cylindrique.

8. Traversée rotative selon l'une des revendications 1 à 7, **caractérisée par le fait que** les surfaces planes (4, 6) d'étanchement par glissement sont situées sur des bagues (24, 26) d'étanchement par glissement pouvant être respectivement reliées, de manière rigide et étanche, aux parties fixe et rotative (3,1) de la machine.

9. Traversée rotative selon l'une des revendications 1 à 8, **caractérisée par le fait que** la surface intérieure ou extérieure (14, 16) d'enveloppe cylindrique est montée avec souplesse élastique dans la direction radiale.

10. Traversée rotative selon l'une des revendications 1 à 9, **caractérisée par** la présence, dans un carter de ladite traversée rotative relié rigidement à la partie fixe (3) de la machine, d'un orifice radial (5) de délivrance d'un agent respectivement gazeux ou non lubrifiant, et d'un orifice axial (25) de délivrance d'un agent lubrifiant.

11. Traversée rotative selon la revendication 10, **caractérisée par le fait que** l'orifice (5) de délivrance respective d'un gaz ou d'un agent non lubrifiant, et/ou l'orifice (25) de délivrance d'un agent lubrifiant, sont respectivement équipés de clapets antiretour (19, respectivement 21) interdisant la sortie de l'agent considéré.

12. Traversée rotative selon l'une des revendications 1 à 11, **caractérisée par le fait que** les surfaces d'étanchement (6, 16) de la partie fixe de la machine sont disposées sur une douille (11) qui est montée avec mobilité axiale et porte également le clapet antiretour (21) destiné à l'agent lubrifiant délivré axialement, tandis que l'agent non lubrifiant est délivré par l'intermédiaire d'un orifice radial débouchant entre ledit clapet antiretour et lesdites surfaces d'étanchement (6,16).
